# EUROPEAN PATENT APPLICATION

(11) **EP 3 719 378 A1**
(43) Date of publication of application: **07.10.2020**
(21) Application number: 19167512.3
(22) Date of filing: 05.04.2019
(51) Int. Cl.: F16L 53/37, H02M 3/156, H02M 5/458, H02M 1/00

(54) **SYSTEM FOR SUPPLYING POWER TO A ONE PHASE LOAD FROM A THREE PHASE GRID**

(71) Applicant: ABB Schweiz AG, 5400 Baden (CH)
(72) Inventor: NIEDERER, Ralph, 4053 Basel (CH); LENDENMANN, Heinz, 722 18 Västerås (SE); SCHLAPBACH, Ulrich, 3097 Liebefeld (CH)
(74) Representative: Kolster Oy Ab

(57) **Abstract**

A system for supplying power to a one phase load from a three phase grid for direct electrical heating in subsea applications, wherein the system comprises two power conversion cells. Each power conversion cell comprises a three phase voltage source inverter, a booster stage, a rectifier and a DC link.

## Description

### TECHNICAL FIELD

The present disclosure generally relates to the field of high voltage power converters. In particular, it relates to a system for supplying power to a one phase load from a three phase grid for direct electrical heating in subsea applications.

### BACKGROUND

In recent years, there has been a growing interest in installing electrical installations on the sea floor in depths from a few tens of meters to even kilometres. For example, subsea oil and gas production employs electric equipment like drilling motors, pumps, and compressors, all demanding electrical infrastructure.

In bringing power electronics into demanding environments, such as for subsea applications where the hydrostatic pressure level can be several hundreds of bars, extensive installations are both difficult to install and to maintain. For example a voluminous installation will result in additional points of failure. In addition, since the possibilities of maintaining a subsea installation in position are limited, a simplified installation with a reduced risk of failure is beneficial.

In subsea applications, direct electrical heating (DEH) can be used to limit the formation of hydrates. This formation of hydrates is an occurring problem in for example subsea applications, such as for example production of oil and gas in which hydrates may start to form as well stream cools down. This may be prevented by using a direct electrical heating system, which may be used in combination with thermal insulation.

Direct electrical heating may also be utilized in numerous other subsea applications in which a more controlled environment in subsea installations is desired.

### SUMMARY OF THE INVENTION

One example of existing power conversion drive topologies that may be used to drive a load are motor drive topologies. A component in the motor drive case is the power conversion cell, designed to convert an isolated three phase input voltage into a single-phase AC voltage and utilizing an H-bridge connection. The combinations of such power conversion cells create in the case of the motor drive a three phase output with variable voltage and variable frequency. In that situation a drive controller modulates each power conversion cell, such that the entire power conversion cell assembly for example creates a scalar or vector controlled output voltage. This output is however merely suitable to drive a motor load such as a pump or compressor.

In contrast to a motor drive, a power conversion unit to feed a direct electrical heating load must produce a single-phase AC output. In addition, the output voltage that is needed to drive the desired output current differs in comparison with an existing motor drive.

This single phase power may be for example be generated using large capacitor banks and inductors to convert a three phase supply into a single phase supply. However, such solutions demand a large volume and are thereby not suited for subsea installations. In addition, as the load impedance is not known prior to installation, and as a three phase to one phase conversion arrangements such as this is sensitive to proper operation, such solutions require tampering after installation, which is not suitable for a subsea installation. Hence, in order to supply power to a direct electrical heating system in a subsea setting, a need for an improved system for supplying power from a three phased grid that does not expose the feeding network to power flow pulsations has been identified.

In view of the above, a general object of the present disclosure is to provide an improved system for supplying power to a one phase load from a three phase grid for direct electrical heating in subsea applications.

Hence, according to a first aspect of the present disclosure there is provided a system for supplying power to a one phase load from a three phase grid, wherein the system comprises two power conversion cells. Each power conversion cell comprises a three phase voltage source inverter, VSI, a rectifier and a DC link. The three phase VSI is configured to be connected to the grid. The rectifier is in connection to the three phase VSI. The DC link is in connection with the rectifier and configured to be connected to the load. The DC links of the two power conversion cells are connected with the load via an H-bridge connection to control a power flow to the load impedance. Each of the two power conversion cells further comprises a booster stage. The booster stages are arranged between the rectifier and the DC link of each respective power conversion cell. The booster stages are further arranged to control the voltage through each booster stage, thereby balancing the one phase load on the three phases towards the grid side.

By this, a system for supplying power to a one phase load from a three phase grid for direct electrical heating, capable of creating any output voltage of any desired frequency eliminates the need for the component tunability and thus enable subsea installation to be established.

By utilizing the booster stages as described, energy can be stored during part of the operation cycle and thus reduce the power oscillations. This may be achieved with the described system since the voltage oscillations stemming from the necessary power flow control peaks where the load voltage with a strongly reactive load as in the direct electrical heating case requires it to be highest, and the reactive (inductive) load at the booster stages has a peak when the output voltage to drive the direct electrical heating load current has a peak demand. Thereby, the load as seen from the three phase grid is stabilized.

The power flow that is controlled by the H-bridge connection may be in either direction. For example the H-bridge connection may be used to control a power flow both to and from the load.

In one embodiment, the booster stages may be modulated so that a constant DC current is drawn from the rectifier at the transformer of each power conversion cell. At least by this the three phase supply grid will see a constant power demand from the one phase load.

In one embodiment, the DC link of a power conversion cell may further comprise a capacitor used to absorb fluctuations in the load energy. By this stabilizing the load, as seen from the three phase grid, is stabilized further.

In one embodiment, the booster stage of a power conversion cell may further comprise a capacitor used to absorb fluctuations in the load energy. By this stabilizing the load, as seen from the three phase grid, is stabilized further.

According to one embodiment, the system may further comprise at least two additional power conversion cells. Each one of the at least two additional power conversion cells may comprise a three phase voltage source inverter, VSI, a rectifier and a DC link. The three phase VSI is configured to be connected to the grid. The rectifier is in connection to the three phase VSI. The DC link is in connection with the rectifier and configured to be connected to the load. The at least two additional power conversion cells are connected serially with the two power conversion cells to increase the output voltage.

According to one embodiment, each of the at least two additional power conversion cells may further comprises a booster stage arranged between the rectifier and the DC link of each respective power conversion cell.

According to one embodiment, additional power conversion cells may be connected serially to increase the output voltage. Parallel cell branches may be arranged to comprise the same amount of serially connected power conversion cells. For example a cell configuration with six series connected cells may be used in each parallel cell branch to increase the output voltage of the system.

The term "cell" in this context means a power conversion cell.

The term "cell branch" in this context means the power conversion cells that are serially connected, the serially connected power conversion cells may be identical. The power conversion cells in a branch may also be varied.

According to one embodiment, the system may further comprise at least two additional power conversion cells. Each one of the at least two additional power conversion cells may comprise a three phase voltage source inverter, VSI, a rectifier and a DC link. The three phase VSI is configured to be connected to the grid. The rectifier is in connection to the three phase VSI. The DC link is in connection with the rectifier and configured to be connected to the load. The at least two additional power conversion cells are connected in parallel with the two power conversion cells to increase the output current.

According to one embodiment, each of the at least two additional power conversion cells may further comprises a booster stage arranged between the rectifier and the DC link of each respective power conversion cell.

According to one embodiment, additional power conversion cells may be connected in parallel to increase the output current. Parallel cell branches may be arranged to comprise the same amount of serially connected power conversion cells. For example a cell configuration with six series connected cells may be used in each parallel cell branch to increase the output voltage of the branch, while a plurality of such branched may be connected in parallel to also increase the output current of the system.

According to one embodiment, the system may for example comprise twelve power conversion cells. Each one of the power conversion cells may comprise a three phase voltage source inverter, VSI, a rectifier and a DC link. The three phase VSI is configured to be connected to the grid. The rectifier is in connection to the three phase VSI. The DC link is in connection with the rectifier and configured to be connected to the load. The twelve power conversion cells may be arranged in two parallel branches having six power conversion cells in each branch, the twelve power conversion cells may also be arranged in four parallel branches having three power conversion cells in each branch, depending on configuration.

According to one embodiment, each of the twelve power conversion cells may further comprises a booster stage arranged between the rectifier and the DC link of each respective power conversion cell.

According to one embodiment, the system may for example comprise a plurality of power conversion cells. Each one of the power conversion cells may comprise a three phase voltage source inverter, VSI, a rectifier and a DC link. The three phase VSI is configured to be connected to the grid. The rectifier is in connection to the three phase VSI. The DC link is in connection with the rectifier and configured to be connected to the load. The plurality power conversion cells may be arranged in parallel branches having an equal number of power conversion cells in each branch, where the number of branches times the number of power conversion cells in each cells are the same number as the plurality of power conversion cells.

According to one embodiment, each of the plurality power conversion cells may further comprises a booster stage arranged between the rectifier and the DC link of each respective power conversion cell.

According to one embodiment, the rectifier may be a diode rectifier. The rectifier is arranged to operate at at least 2400 V.

According to one embodiment, the system may further comprise a three phase multi winding medium voltage transformer to supply power to each three phase VSI of the power conversion cells.

According to one embodiment, the system may further comprise three single phase transformers to supply power to each of the three phases of the three phase VSI of the power conversion cells. By this, balancing may be performed towards a point of common contact.

According to one embodiment, the system may be arranged in connection with a pipeline and the single phase load may be a direct electric heated, DEH, pipeline load.

According to one embodiment, the system may be arranged to be capable to supply at least 100 kW to the load.

According to one embodiment, the system may be arranged to be capable to supply voltages of at least 5 kV to the load.

According to one embodiment, the system may be arranged to be capable to supply voltages of at least 8 kV to the load.

According to one embodiment, the system may be arranged to be capable to supply voltages of at least 14 kV to the load.

According to one embodiment, the system may be arranged to be capable to supply voltages of at least 20 kV to the load.

According to one embodiment, the system may further comprise an apparatus control unit that is arranged to control at least one of the booster stages to control the DC-link voltage.

According to one embodiment, each power conversion cell may further comprise a drive controller that is arranged to modulate the output of each respective power conversion cell.

According to one embodiment, the system may further comprise a capacitor suitable for operation at 300 bar.

According to one embodiment, the cell voltage on at least one DC link is more than 1500 V.

According to one embodiment, the cell voltage on at least one DC link is more than 1800 V.

According to one embodiment, the cell voltage on at least one DC link is more than 2000 V.

According to one embodiment, the cell voltage on at least one DC link is more than 2500 V.

### BRIEF DESCRIPTION OF THE DRAWINGS

The invention is described in the following illustrative and non-limiting detailed description of exemplary embodiments, with reference to the appended drawings, wherein:
Figure 1 is a schematic illustration of a system according to an aspect of the present invention.
Figure 2 is a schematic illustration of an embodiment according to an aspect of the present invention.

All figures are schematic, not necessarily to scale, and generally only show parts that are necessary in order to elucidate the invention, wherein other parts may be omitted or merely suggested. Throughout the figures the same reference signs designate the same, or essentially the same features.

### DETAILED DESCRIPTION

The present invention can be used to supply power to a one phase load from a three phase grid which overcome or at least mitigate the problems of the prior art and with an improved functionality in a more efficient construction that provides reliability benefits.

The invention is described in the following illustrative and non-limiting detailed description of exemplary embodiments, with reference to the appended drawings, wherein:

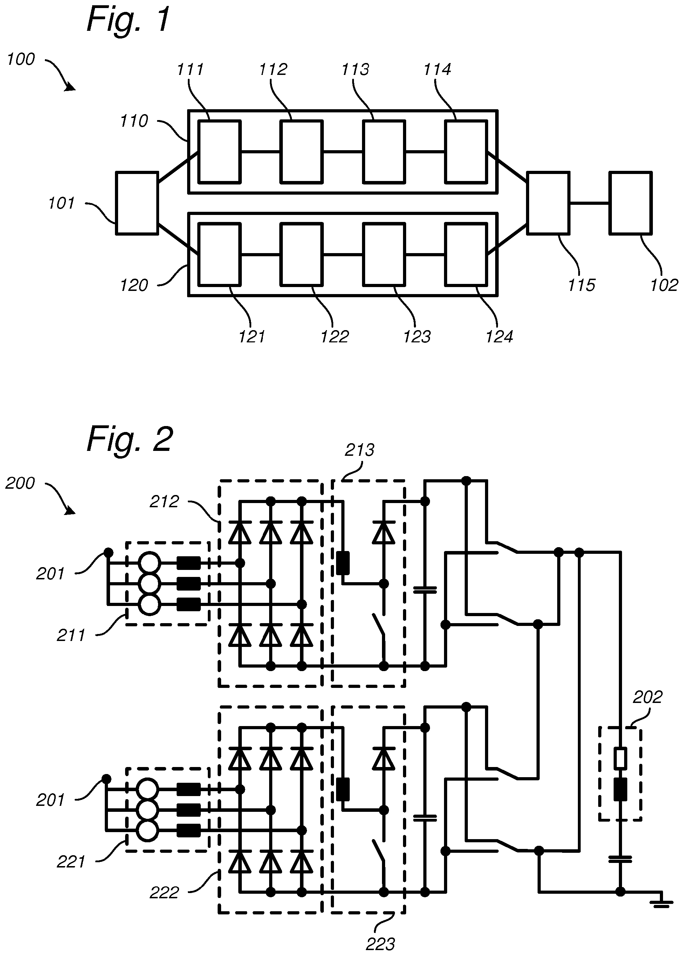

Figure 1 shows a schematic illustration of a system 100 for supplying power to a one phase load 102 from a three phase grid 101 according to an embodiment of the present invention. The system 100 comprises two power conversion cells 110, 120.

The first power conversion cell 110 comprises a first three phase voltage source inverter (VSI) 111, a first rectifier 112, a first booster stage 113 and a first DC link 114. The first three phase voltage source inverter 111 is connected to the three phase grid 101. The first rectifier 112 is in connection with the first three phase VSI 111. The first booster stage 113 is in connection with the first rectifier 112. The first DC link 114 is in connection with the first booster stage 113.

The second power conversion cell 120 comprises a second three phase VSI 121, a second rectifier 122, a second booster stage 123 and a second DC link 124. The second three phase voltage source inverter 121 is connected to the three phase grid 101. The second rectifier 122 is in connection with the second three phase VSI 121. The second booster stage 123 is in connection with the second rectifier 122. The second DC link 124 is in connection with the second booster stage 123.

The first and second DC links 114, 124 of the two power conversion cells 110, 120 are connected with the load 102 via an H-bridge connection 115.

The system 100 is thereby arranged to control a power flow to the load impedance via the H-bridge connection 115 and to control the voltage through the first and second booster stages 113, 123 to balance the one phase load 102 to the three phased towards the three phase grid 101.

Figure 2 shows a schematic illustration of a system 200 for supplying power to a one phase load 202 from a three phase grid 201 according to an embodiment of the present invention having two power conversion cells.

The first power conversion cell comprises a first three phase VSI 211, a first rectifier 212, a first booster stage 213 and a first DC link. The first three phase voltage source inverter 211 is connected to the three phase grid 201. The first rectifier 212 is in connection with the first three phase VSI 211. The first booster stage 213 is in connection with the first rectifier 212. The first DC link is in connection with the first booster stage 213. The second power conversion cell comprises a second three phase VSI 221, a second rectifier 222, a second booster stage 223 and a second DC link. The second three phase VSI 221 is connected to the three phase grid 201. The second rectifier 222 is in connection with the second three phase VSI 221. The second booster stage 223 is in connection with the second rectifier 222. The second DC link is in connection with the second booster stage 223. The first and second DC links of the two power conversion cells are connected with the load 202 via an H-bridge connection 215. The system 200 is thereby arranged to control a power flow to the load impedance via the H-bridge connection 215 configuration and to control the voltage through the first and second booster stages 213, 223 to balance the one phase load 202 to the three phased towards the three phase grid 201.

One utilization of direct electrical heating system is to heat a subsea flowline or similar subsea pipe. The flowline to be heated may be an active conductor in a single-phase electric circuit, with a single core power cable as the forward conductor. Power may for example be supplied via a rise cable from the platform main power. At a riser base the riser cable may be spliced with a feeder cable that may be connected to the heated flowline. One of the two riser cable conductors is connected to the near end of the flowline. The other is connected to the piggyback cable, which is again connected to the far end of the flowline. Direct electrical heating piggyback cables may be equipped with semiconducting sheaths and without metallic screens. The flowline may for example employ cathodic protection with sacrificial anodes. The sacrificial anodes may be used to galvanically connect the heating system to the surrounding sea water, wherein the sea water may act as an electric conductor in parallel with the flowline. In other words, the current flowing in the piggyback cable may be divided between flowline and sea water. In addition, additional sacrificial anodes may be used in order to control the corrosion of sacrificial anodes at the cable connection points.

The direct electrical heating system may also be used to heat other pipes and subsea installations, between shores and/or sea platforms. For example intercontinental subsea infrastructure, oil or gas rigs and surrounding infrastructure, subsea power transmission infrastructure and similar.

The system 100 may be arranged with additional power conversion cells, these additional power conversion cells are similar or identical to the first power conversion cell 110 or the second power conversion cell 120. Each of the additional power conversion cells may be connected serially with the first power conversion cell 110 or the second power conversion cell 120 to increase the output voltage of the system 100. The additional power conversion cells may also be connected in parallel with the first power conversion cell 110 and/or the second power conversion cell 120 to increase the output current of the system 100. The additional power conversion cells may also be divided into groups of power conversion cells, where some groups of power conversion cells may be connected serially with the first power conversion cell 110 or the second power conversion cell 120, and some groups of power conversion cells may be connected in parallel with the first power conversion cell 110 and the second power conversion cell 120. By this, both the output voltage and the output current of the system 100 may be increased.

The H-bridge connection may be an electronic circuit or arrangement that can switch the polarity of an applied voltage. The H-bridge connection may comprise an array of relays, a semiconductor based arrangement and/or a microcontroller arrangement that may be used to control the H-bridge connection. For example the H-bridge connection may be constructed as a half bridge or a full bridge. The H-bridge connection may also comprise diodes to reduce the risk of shoot through. The H-bridge connection may be controlled by a local or external control unit.

The system may also comprise a power conversion cell control unit. The power conversion cell control unit may be used for autonomous control and protection of the power conversion cells, based on data available and/or collected at the power conversion cell level. The power conversion cell protection that may be implemented can relate to the protection of the cell power hardware. The power conversion cell control unit may be controlled via software that may be downloadable/uploadable even when the converter is deployed and installed, thereby enabling updates. The power conversion cell control unit may comprise connections and means to control the power conversion cells and communication means to communicate with a central control point.

The system may also comprise an overvoltage protection unit. The overvoltage protection unit may comprise a switchgear with a main circuit breaker and be used to protect the system. The overvoltage protection unit may for example protect the system against overvoltage that may occur when a breaker interrupts the current.

The system may also comprise a charging unit. The charging unit may comprise charging means to be used to charge capacitors in the power conversion cells.

The system may also comprise a voltage measurement unit. The voltage measurement unit may comprise a sensor and communication means and be used to measure the input and/or output voltages. The voltage measurement unit may be used inside the drive controller, for example for both the control of the modulation and power conversion cells, as well as for protective purposes.

The system may also comprise an output paralleling unit. The output paralleling unit may be used to disconnect malfunctioning power conversion cell branches. This can be used when one or more power conversion cells are lost or otherwise unresponsive. Otherwise the lost power conversion cells would limit the output voltage of the system. By using the output paralleling unit to disconnect the entire power conversion cell branch, the output voltage of the system will not be limited. However, by disconnecting a power conversion cell branch the output current of the system will be limited, meaning that the delivered heating power will be smaller, but the system will still be operational.

The system may comprise different control units, for example an apparatus control unit that controls the booster stages and thereby controls the voltage in the corresponding DC-links and/or controls the H-bridge connection and thereby control the power flow to the load impedance. There may also be several apparatus control units, wherein each apparatus control unit controls a specific booster stage and/or specific H-bridge connection. In addition, the system may comprise a drive controller that is arranged to modulate the output of the cells. There may also be several drive controllers that are arranged to modulate the output of each respective cell. The system may further comprise an additional system controller that is arranged to control the one or more apparatus control units and/or drive controllers, the additional system controller may be arranged in a proximate location or an external location. The apparatus control units may modulate the H-bridge connections according to reference values from the system controller. Together with the other power conversion cells in the branch, this may be used to create the desired instantaneous output voltage. The power conversion cell may also have regulating functions to keep the voltage in the capacitor within permitted values.

In block diagrams, illustrated components are depicted as discrete functional blocks, but embodiments are not limited to systems in which the functionality described herein is organized as illustrated. The functionality provided by each of the components may be provided by hardware modules that are differently organized than is presently depicted. The control of the system described herein may be provided by one or more processors of one or more computers executing code stored on a tangible, non-transitory, machine readable medium. In some cases, notwithstanding use of the singular term "medium", the instructions may be distributed on different storage devices associated with different computing devices, for instance, with each computing device having a different subset of the instructions. Such implementation shall be considered consistent with usage of the singular term "medium" herein. In some cases, third party content delivery networks may host some or all of the information conveyed over networks, in which case, to the extent the information (e.g. content) is said to be supplied or otherwise provided, the information may be provided by sending instructions to retrieve that information from a content delivery network.

As used throughout this application, the word "may" is used in a permissive sense (i.e. meaning having the potential to), rather than the mandatory sense (i.e. meaning must). As used throughout this application, the singular forms "a," "an," and "the" include plural referents unless the content explicitly indicates otherwise. Thus, for example, reference to "an element" or "the element" includes a combination of two or more elements, notwithstanding use of other terms and phrases for one or more elements, such as "one or more." Terms describing conditional relationships, e.g., "in response to X, Y," "upon X, Y,", "if X, Y," "when X, Y," and the like, encompass causal relationships in which the antecedent is a necessary causal condition, the antecedent is a sufficient causal condition, or the antecedent is a contributory causal condition of the consequent, e.g. "state X occurs upon condition Y occurring" is generic to "X occurs solely upon Y" and "X occurs upon Y and Z." Such conditional relationships are not limited to consequences that instantly follow the antecedent obtaining, as some consequences may be delayed, and in conditional statements, antecedents are connected to their consequents, e.g. the antecedent is relevant to the likelihood of the consequent occurring. Further, unless otherwise indicated, statements that one value or action is "based on" another condition or value encompass both instances in which the condition or value is the sole factor and instances in which the condition or value is one factor among a plurality of factors.

While specific embodiments have been described, the skilled person will understand that various modifications and alterations are conceivable within the scope as defined in the appended claims.

## Claims

1. A system (100, 200) for supplying power to a one phase load (102, 202) from a three phase grid (101, 201), wherein the system comprises:
two power conversion cells (110, 120), each power conversion cell comprising a three phase voltage source inverter (111, 121, 211, 221), VSI, configured to be connected to the grid, a rectifier (112, 122, 212, 222) in connection to the three phase VSI, and a DC link (114, 124) in connection to the rectifier and configured to be connected to the load;
wherein the DC links of the two power conversion cells are connected with the load via an H-bridge connection (115) to control a power flow to the load impedance;
wherein each of the two power conversion cells further comprises a booster stage (113, 123, 213, 223) arranged between the rectifier and the DC link of each respective power conversion cell, the booster stages being arranged to control the voltage through each booster stage, thereby balancing the one phase load on the three phases towards the grid side.

2. A system according to any one preceding claim, further comprising at least two additional power conversion cells, each comprising a three phase voltage source inverter, VSI, connectable to the grid, a rectifier in connection to the three phase VSI, and a DC link in connection to the rectifier and connectable to the load;
wherein the at least two additional power conversion cells are connected serially with the two power conversion cells to increase the output voltage.

3. A system according to any one preceding claim, further comprising at least two additional power conversion cells, each comprising a three phase voltage source inverter, VSI, connectable to the grid, a rectifier in connection to the three phase VSI, and a DC link in connection to the rectifier and connectable to the load;
wherein the at least two additional power conversion cells are connected in parallel with the two power conversion cells to increase the output current.

4. A system according to any one preceding claim, wherein the rectifier is a diode rectifier; and wherein the rectifier is arranged to operate at at least 2400 V.

5. A system according to any one preceding claim, further comprising a three phase multi winding medium voltage transformer to supply power to each three phase VSI of the power conversion cells.

6. A system according to any one preceding claim, wherein the system is arranged in connection with a pipeline and the single phase load is a direct electric heated, DEH, pipeline load.

7. A system according to any one preceding claim, wherein the system is arranged to be capable to supply at least 100 kW to the load.

8. A system according to any one preceding claim, wherein the system is arranged to be capable to supply voltages of at least 8 kV to the load.

9. A system according to any one preceding claim, wherein the system further comprises an apparatus control unit that is arranged to control at least one of the boosters to control the DC-link voltage.

10. A system according to any one preceding claim, wherein each power conversion cell further comprises a drive controller that is arranged to modulate the output of each respective cell.

11. A system according to any one preceding claim, further comprising a capacitor suitable for operation at 300 bar.

12. A system according to any one preceding claim, wherein the cell voltage on at least one DC link is more than 1800 V.
